# EUROPÄISCHE PATENTSCHRIFT

(11) **EP 0 992 384 B1**
(45) Veröffentlichungstag und Bekanntmachung des Hinweises auf die Patenterteilung: **08.09.2004**
(21) Anmeldenummer: 99118157.9
(22) Anmeldetag: 11.09.1999
(51) Int. Cl.: B60J 7/04, B60J 7/047, B60J 7/20

(54) **Personenkraftwagen mit einem verschwenkbaren Fliessheckscheibenrahmen**
Passenger vehicle with pivotable aerodynamic rear window frame
Véhicule automobile avec cadre de lunette arrière aérodynamique escamotable

(30) Priorität: 05.10.1998 DE 19845734
(43) Veröffentlichungstag der Anmeldung: 12.04.2000
(73) Patentinhaber: Bayerische Motoren Werke Aktiengesellschaft, 80809 München (DE)
(72) Erfinder: Siring, Harald, 81377 München (DE); Schröder, Burkhard, 48336 Sassenberg (DE)

(56) Entgegenhaltungen:
- EP-A- 0 101 322
- DE-A- 4 341 343
- DE-A- 4 413 704
- FR-A- 2 744 957
- US-A- 5 078 447

## Beschreibung

Die Erfindung betrifft einen Personenkraftwagen mit einem Fließheckscheibenrahmen, der um eine im Fahrzeug-Heckbereich quer zur Fahrzeug-Längsachse verlaufende Schwenkachse in den Fahrzeug-Innenraum hinein verschwenkbar ist, sowie mit einem in Richtung der Fahrzeug-Längsachse verschiebbaren Teil des Fahrzeugdaches, welches in den Fließheckscheibenrahmen einführbar und mit der darin angeordneten Heckscheibe zumindest im wesentlichen in Überdeckung bringbar und in diesem Zustand in den Fahrzeug-Innenraum mitverschwenkbar ist. Zum technischen Umfeld wird neben der DE 37 21 895 A1 insbesondere auf die DE 43 41 343 A1 verwiesen.

Diese beiden genannten Schriften zeigen vielfältig verwandelbare Personenkraftwagen (PKWs), welche neben einer vollständig geschlossenen Variante sowie einer sog. Targa-Version, in welcher ein relativ großer Flächenanteil des Fahrzeugdaches freigelegt ist, auch eine sog. Quasi-Cabriolet-Version ermöglichen, bei welcher der genannte Fließheckscheibenrahmen zusammen mit dem Fahrzeugdach in den Fahrzeug-Innenraum in etwa auf die Höhe der Türbrüstung hineingeschwenkt ist, so daß ein nach hinten hin vollständig offenes Fahrzeug entsteht. Hierbei wird jedoch jeweils der zunächst viersitzige PKW in einen Zweisitzer verwandelt, nachdem der Fließheckscheibenrahmen inclusive des Fahrzeugdaches oberhalb der hinter den Vordersitzen vorgesehenen Rücksitzbank zum Liegen kommt.

Demgegenüber an einem PKW nach dem Oberbegriff des Anspruchs 1 Verbesserungen aufzuzeigen, ist Aufgabe der vorliegenden Erfindung. Die Lösung dieser Aufgabe ist dadurch gekennzeichnet, daß das Fahrzeugdach aus mindestens zwei, im geschlossenen Zustand hintereinander liegenden Dachteilen besteht, die separat in Richtung der Fahrzeug-Längsachse verfahrbar und beide - dann übereinanderliegend - in den Fließheckscheibenrahmen einführbar sind. Vorteilhafte Aus- und Weiterbildungen sind Inhalt der Unteransprüche.

Näher erläutert wird die Erfindung anhand eines bevorzugten Ausführungsbeispieles, welches in den beigefügten Figuren mit unterschiedlichen Positionen der verschiedenartig positionierbaren Karosserie-Elemente dargestellt ist. Dabei zeigt
- **Fig.1**: den vollständig geschlossenen PKW,
- **Fig.2**: den PKW mit teilweise geöffnetem Fahrzeugdach,
- **Fig.3**: die sog. Targa-Version mit vollständig geöffnetem Fahrzeugdach,
- **Fig.4**: die sog. Quasi-Cabriolet-Version, sowie
- **Fig.5**: diesen PKW mit geschlossenem Fahrzeugdach sowie mit in den Fahrzeug-Innenraum hineinverschwenkten Fließheckscheibenrahmen.

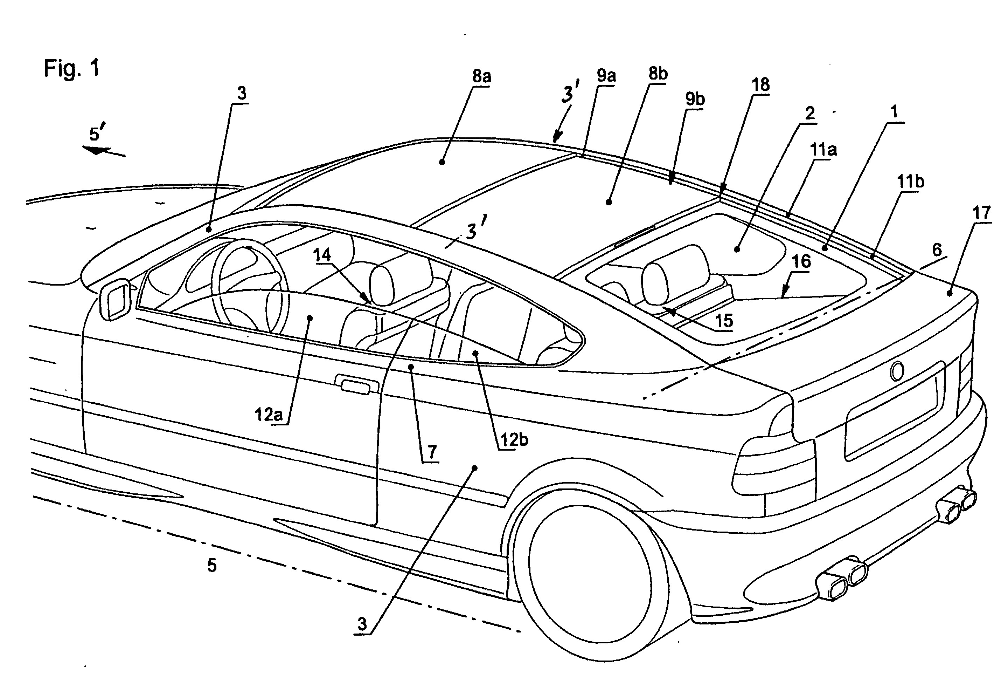

Mit der Bezugsziffer 1 ist ein sog. Fließheckscheibenrahmen eines PKW's bezeichnet, innerhalb dessen eine Heckscheibe 2 angeordnet ist. Der Begriff Fließheckscheibenrahmen" verdeutlicht dabei, daß der Heckbereich des PKW's in Form eines Fließheckes, wie bspw. in der Art eines Coupes gestaltet ist, d.h. es handelt sich hier nicht um eine Limousine mit Stufenheck. Dabei ist der Seitenrahmen 3 der Fahrzeug-Karosserie dem Verlauf des Fließheckscheibenrahmens 1 in seiner geschlossenen Position (bspw. nach **Fig.1**) angepaßt.

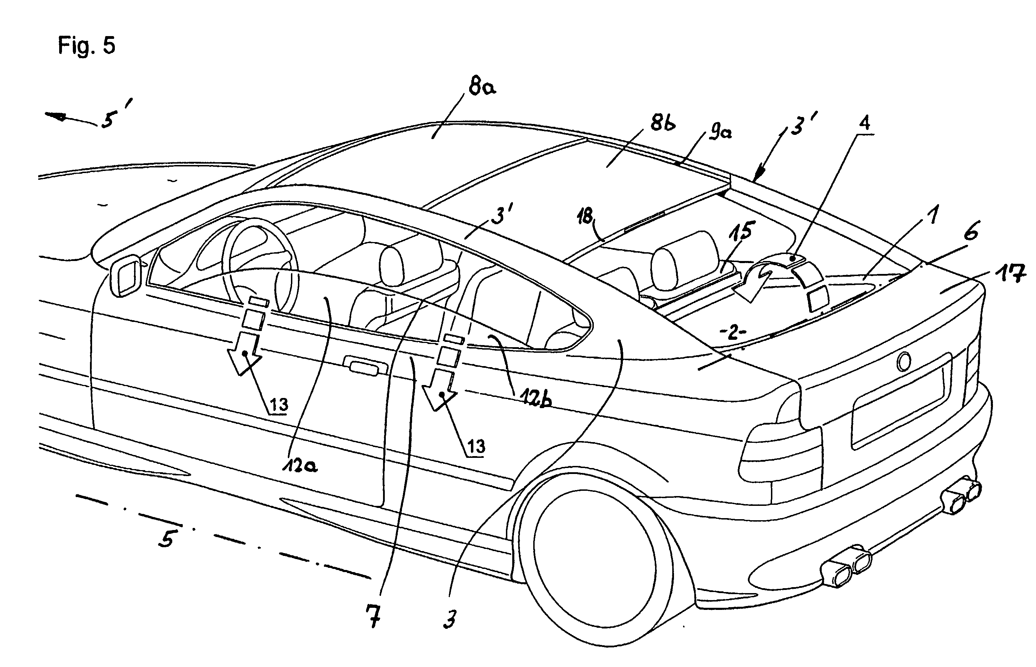

Ausgehend von dieser geschlossenen Position nach **Fig.1** ist der Fließheckscheibenrahmen 1 inclusive der darin starr angeordneten Heckscheibe 2 gemäß Pfeilrichtung 4 um eine im Fahrzeug-Heckbereich quer zur Fahrzeug-Längsachse 5 verlaufende Schwenkachse 6 in den Fahrzeug-Innenraum hineinverschwenkbar, so wie dies in **Fig.5** dargestellt ist. Hierbei kommt der Fließheckscheibenrahmen 1 in etwa auf der Höhe der Türbrüstung 7 und im wesentlichen parallel zu dieser verlaufend zum Liegen.

Das in Richtung der Fahrzeug-Längsachse 5 bzw. der Fahrrichtung 5' des PKW's betrachtet vor dem Fließheckscheibenrahmen 1 zwischen dem linksseitigen und dem rechtsseitigen Seitenrahmen 3 liegende FahrzeugDach besteht aus zwei im geschlossenen Zustand nach **Fig.1** hintereinander liegenden Dachteilen 8a, 8b. Sowohl das bezüglich Fahrtrichtung 5' vordere Dachteil 8a als auch das bezüglich Fahrtrichtung 5' hintere Dachteil 8b ist in separaten, in den (starren) Dachholmen 3' der Seitenrahmen 3 vorgesehenen Führungsschienen 9a, 9b in Richtung der Fahrzeug-Längsachse 5 verschiebbar beidseitig geführt.

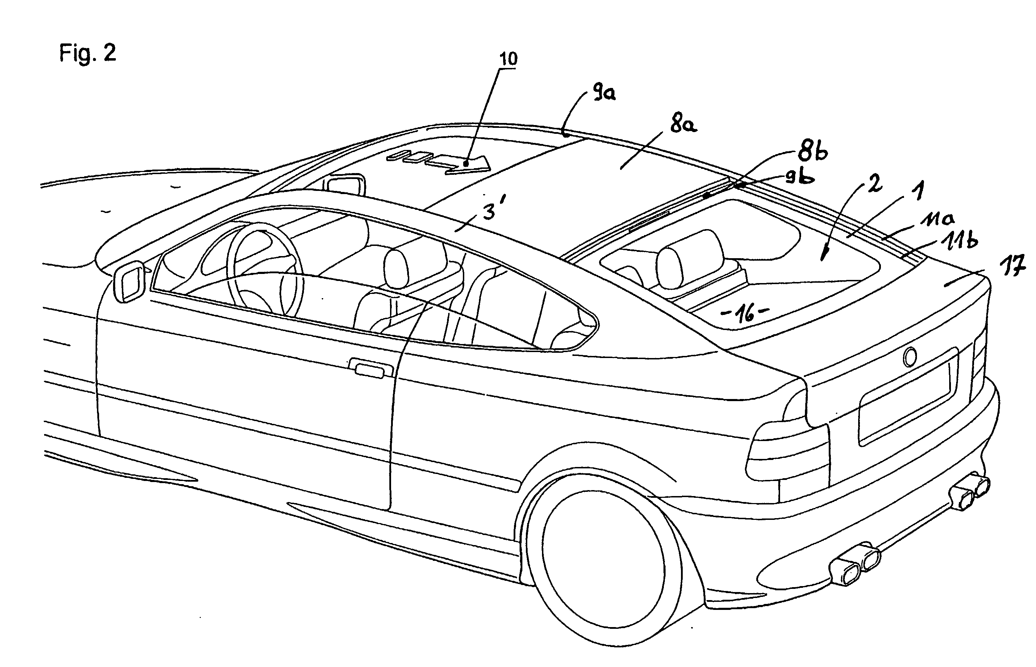

Ausgehend vom vollständig geschlossenen Zustand nach **Fig.1** ist das vordere Dachteil 8a - wie **Fig.2** zeigt - zunächst gemäß Pfeilrichtung 10 nach hinten über das hintere Dachteil 8b verschiebbar, d.h. die Führungsschiene 9a des vorderen Dachteiles 8a liegt im Dachholm 3' oberhalb der Führungsschiene 9b des hinteren Dachteiles 8b. Hierdurch wird wie bei konventionellen PKWs mit Schiebedach der vordere Teil einer in der Fahrzeug-Karosserie vorgesehenen nicht bezeichneten Dachöffnung freigelegt.

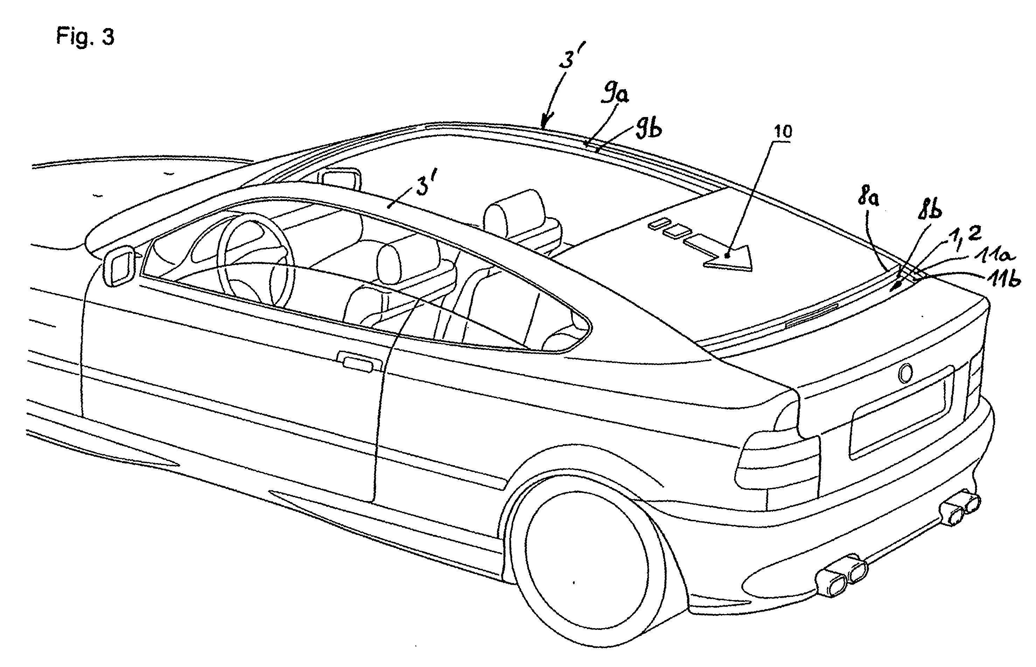

Ausgehend von diesem teilweise geöffneten Zustand nach **Fig.2** sind sowohl das vordere Dachteil 8a als auch das hintere Dachteil 8b - wie **Fig.3** zeigt - weiter gemäß Pfeilrichtung 10 nach hinten über die Heckscheibe 2 verschiebbar, wobei diese beiden Dachteile 8a, 8b in Führungsschienen 11a, 11b, die im Heckscheibenrahmen 1 vorgesehen sind, und die sich in dieser Position des Fließheckscheibenrahmens 1 an die Führungsschienen 9a bzw. 9b anschließen, eingeführt werden. Hierdurch wird die weiter oben sog. Targa-Version erzielt, in welcher die gesamte in der Fahrzeug-Karosserie vorgesehene nicht bezeichnete Dachöffnung freigelegt ist, und wobei die beiden jeweils für sich separat verschiebbaren Dachteile 8a, 8b oberhalb der Heckscheibe 2 im Fließheckscheibenrahmen 1 abgelegt sind.

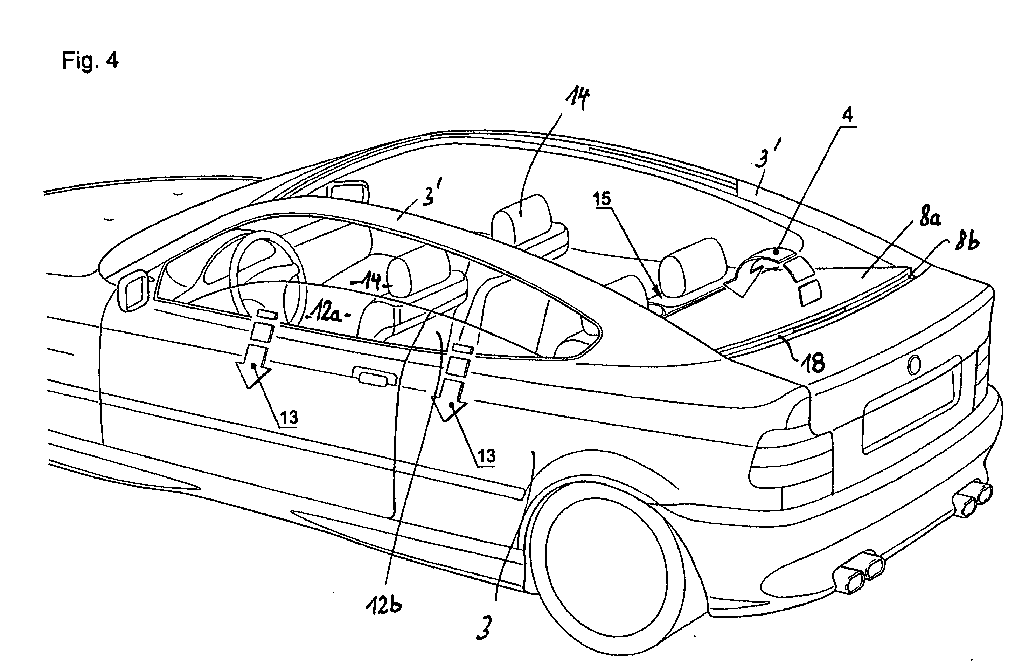

Ausgehend von diesem Zustand nach **Fig.3** ist nun der Heckscheibenrahmen 1 inclusive der darin befindlichen Dachteile 8a und 8b - wie bereits weiter oben in Verbindung mit **Fig.5** beschrieben - gemäß Pfeilrichtung 4 in den Fahrzeug-Innenraum hineinschwenkbar, so daß der in **Fig.4** dargestellte Zustand erreicht wird, welcher als Quasi-Cabriolet-Version des PKW's bezeichnet wird. In diesem Zustand sind somit die beiden Dachteile 8a und 8b sowie die Heckscheibe 2 sozusagen entfernt bzw. sie befinden sich in einer solchen Position, daß sie einen Luftzutritt in den Fahrzeug-Innenraum nicht behindern, so daß für die Fahrzeug-Insassen ein Fahrgefühl wie in einem geöffneten Cabriolet entsteht. Insbesondere gilt dies, wenn die vorderen und hinteren Seitenscheiben 12a und 12b in die abgesenkte Position gebracht werden, so wie dies in **Fig.4** (und **Fig.5**) durch die Pfeile 13 dargestellt ist. Dann ist - wie **Fig.4** eindrucksvoll zeigt - praktisch nurmehr der Seitenrahmen 3 bzw. der Dachholm 3' desselben vorhanden, der vorteilhafterweise als Überrollbügel ausgebildet ist bzw. als permanent vorhandener solcher fungiert.

Wie ersichtlich handelt es sich bei dem beschriebenen PKW um ein viersitziges Fahrzeug, d.h. hinter den beiden wie üblich im Fahrzeug-Innenraum nebeneinander angeordneten Vordersitzen 14 befindet sich eine Rücksitzbank 15, hinter der - wie bei Coupés oder Fließheck-PKWs üblich, eine den im Fahrzeug-Heckbereich liegenden Gepäckraum nach oben hin abdeckende Hutablage 16 (vgl. **Fig.1, 2**) vorgesehen ist. Gegenüber der Umgebung abgeschlossen bzw. von außen zugänglich ist der Gepäckraum dabei wie üblich durch bzw. über eine Heckklappe 17, die ausgehend von der dargestellten geschlossenen Position um eine in der Nähe der Schwenkachse 6 liegende und parallel zu dieser verlaufende nicht näher dargestellte Schwenkachse in die geöffnete Position verschwenkbar ist.

Wie **Fig.5** zeigt, ist der Fließheckscheibenrahmen 1 derart dimensioniert, daß er beim Verschwenken gemäß Pfeilrichtung 4 in den Fahrzeug-Innenraum hinein auf die Hutablage 16 verschwenkbar ist, d.h. der Fließheckscheibenrahmen 1 ist nicht oder nur unwesentlich größer als die Hutablage 16, so daß der Fließheckscheibenrahmen 1 somit hinter der Rücksitzbank 15 bzw. hinter der nicht bezeichneten Rückenlehne oder hinter deren ebenfalls nicht bezeichneten Kopfstützen zum Liegen kommt. Damit bleibt der beschriebene PKW auch in diesem Zustand ein viersitziges Fahrzeug, d.h. die Nutzbarkeit der Rücksitzbank 15 wird nicht eingeschränkt.

Gleiches gilt für den Quasi-Cabriolet-Zustand nach **Fig.4**. Wie ersichtlich sind die beiden Dachteile 8a, 8b, die sich in diesem Zustand im Fließheckscheibenrahmen 1 befinden, derart bemessen, daß sie mit der Heckscheibe 2 im wesentlich in Überdeckung sind. Dies bedeutet, daß diese beiden Dachteile 8a, 8b in diesem Zustand nicht (nach vorne) über den Fließheckscheibenrahmen 1 hinausstehen, so daß mit diesem auch die beiden Dachteile 8a, 8b hinter der Rücksitzbank 15 bzw. auf der Hutablage 16 (in **Fig.4** selbstverständlich nicht sichtbar) abgelegt werden können.

Klar ersichtlich ist, daß diese vorteilhafte Gestaltung praktisch nur dadurch ermöglicht wird, daß das gesamte Fahrzeugdach mehrteilig und im vorliegenden Fall zweiteilig - nämlich aus den beiden Dachteilen 8a, 8b bestehend - ausgebildet ist, wobei diese Dachteile 8a, 8b dann übereinanderliegend in den Fließheckscheibenrahmen 1 einführbar sind. Hätte man hingegen nur ein einziges Dachteil (was nicht gezeigt ist), so müßte der Fließheckscheibenrahmen (1) zur erforderlichen vollständigen Aufnahme desselben so großflächig ausgebildet werden, daß er im in den Fahrzeug-Innenraum hineinverschwenkten Zustand die Rücksitzbank 15 zumindest teilweise überdecken würde. Daß dann der PKW nicht mehr als viersitziges Fahrzeug genutzt werden kann, liegt auf der Hand.

Nicht detailliert dargestellt ist eine besonders vorteilhafte Weiterbildung der Erfindung. Um zu verhindern, daß in einen erfindungsgemäßen PKW, der im Zustand nach Fig.4 abgestellt wurde, bei plötzlich auftretendem Regen Wasser in den Gepäckraum eindringt, ist die Hutablage 16 wasserdicht zum Gepäckraum hin ausgelegt und besitzt einen separaten Wasserablauf. Auch der Fließheckscheibenrahmen 1 ist an seiner Durchtrittsfläche zur Hutablage 16 mit einer Manschette wasserdicht zum Gepäckraum abgedichtet.

Ebenfalls nicht dargestellt ist - neben dem Schwenkmechanismus für den Fließheckscheibenrahmen 1, der hinter dem Seitenrahmen 3 angeordnet ist und mit Übertotpunktkinematik arbeitet - eine an der Hinterkante 18 des hinteren Dachteiles 8b angebrachte Zusatzbremsleuchte. Diese sich bevorzugt über die gesamte Breite des Dachteiles 8b erstreckende Zusatzbremsleuchte befindet sich dabei vorteilhafterweise an derart exponierter Stelle, daß sie bei jeder möglichen Position des hinteren Dachteiles 8b optimal sichtbar ist. Der Vollständigkeit halber sei in diesem Zusammenhang noch darauf hingewiesen, daß die beiden Dachteile 8a, 8b einzeln oder zusammen selbstverständlich auch andersartig positioniert werden können, als hier dargestellt. So sind nicht nur beliebige Zwischenpositionen zwischen den erläuterten Extrempositionen möglich, sondern es kann auch vorgesehen sein, das hintere Dachteil 8b in seiner dann im Dachholm 3' bis in den Frontbereich des Fahrzeug-Innenraumes verlaufenden Führungsschiene 9b unter das sich in der geschlossenen (vorderen) Position befindende vordere Dachteil 8a verfahren zu können.

Abweichend von der beschriebenen bevorzugten Ausführungsform der Erfindung, nach welcher für das vordere Dachteil 8a und für das hintere Dachteil 8b separate Führungsschienen 9a, 9b im Dachholm 3' vorgesehen sind, die sich jeweils in den Fließheckscheibenrahmen 1 hinein fortsetzen, wobei die Führungsschiene 9a des vorderen Dachteiles 8a oberhalb derjenigen (9b) des hinteren Dachteiles 8b liegt, kann auch realisiert bzw. vorgesehen sein, daß beim Übergang vom Zustand nach **Fig.1** in denjenigen nach **Fig.2** das vordere Dachteil 8a unter das hintere Dachteil 8b fährt. Von letzterem wird das vordere Dachteil 8a dann beim Übergang in den Zustand nach **Fig.3** in den Fließheckscheibenrahmen 1 mitgenommen bzw. geführt. Daneben können selbstverständlich eine Vielzahl weiterer Details insbesondere konstruktiver Art durchaus abweichend vom gezeigten Ausführungsbeispiel gestaltet sein, ohne den Inhalt der Patentansprüche zu verlassen. Stets erhält man dabei einen multifunktionalen, stets viersitzigen PKW mit großem Nutzen und insbesondere auch größtmöglichem Gepäckraum.

### Bezugszeichenliste:

- 1: Fließheckscheibenrahmen
- 2: Heckscheibe
- 3: Seitenrahmen
- 3': Dachholm
- 4: Pfeilrichtung: Verschwenken von 1
- 5: Fahrzeug-Längsachse
- 5': Fahrtrichtung
- 6: Schwenkachse (für 1)
- 7: Türbrüstung
- 8a: vorderes Dachteil
- 8b: hinteres Dachteil
- 9a: Führungsschiene für 8a in 3'
- 9b: Führungsschiene für 8b in 3'
- 10: Pfeilrichtung: Verschieben von 8a, 8b
- 11a: Führungsschiene für 8a in 1
- 11b: Führungsschiene für 8b in 1
- 12a: vordere Seitenscheibe
- 12b: hintere Seitenscheibe
- 13: Pfeil: Absenken von 12a, 12b
- 14: Vordersitz
- 15: Rücksitzbank
- 16: Hutablage
- 17: Heckklappe
- 18: Hinterkante von 8b

## Patentansprüche

1. Personenkraftwagen mit einem Fließheckscheibenrahmen (1), der um eine im Fahrzeug-Heckbereich quer zur Fahrzeug-Längsachse (5) verlaufende Schwenkachse (6) in den Fahrzeug-Innenraum hinein verschwenkbar ist, sowie mit einem in Richtung der Fahrzeug-Längsachse (5) verschiebbaren Teil des Fahrzeugdaches, welches in den Fließheckscheibenrahmen (1) einführbar und mit der darin angeordneten Heckscheibe (2) zumindest im wesentlichen in Überdeckung bringbar und in diesem Zustand in den Fahrzeug-Innenraum mitverschwenkbar ist,
**dadurch gekennzeichnet, daß** das Fahrzeugdach aus mindestens zwei, im geschlossenen Zustand hintereinander liegenden Dachteilen (8a, 8b) besteht, die separat in Richtung der Fahrzeuglängsachse (5) verfahrbar und beide - dann übereinanderliegend - in den Fließheckscheibenrahmen (1) einführbar sind.

2. Personenkraftwagen nach Anspruch 1, wobei im Fahrzeug-Innenraum Vordersitze (14) und eine Rücksitzbank (15) vorgesehen sind,
**dadurch gekennzeichnet, daß** der Fließheckscheibenrahmen (1) auf eine hinter der Rücksitzbank (15) vorgesehene Hutablage (16) verschwenkbar ist.

3. Personenkraftwagen nach Anspruch 1 oder 2,
**dadurch gekennzeichnet, daß** der Fließheckscheibenrahmen (1) in seiner in den Fahrzeug-Innenraum hineingeschwenkten Position und/oder die hinter der Rücksitzbank (15) vorgesehene Hutablage (16) einen unterhalb dieser genannten Elemente im Fahrzeug-Heckbereich vorgesehenen Gepäckraum gegen den Eintritt von Regenwasser abdichtet bzw. abdichten.

4. Personenkraftwagen nach einem der vorangegangenen Ansprüche,
**dadurch gekennzeichnet, daß** für das im geschlossenen Zustand vordere (8a) sowie für das hintere Dachteil (8b) separate Führungsschienen (9a, 9b) im starren Dachholm (3') des Seitenrahmens (3) der Fahrzeug-Karosserie vorgesehen sind, die sich in den Fließheckscheibenrahmen (1) hinein fortsetzen, wobei die Führungsschiene (9a,11a) des vorderen Dachteiles (8a) oberhalb derjenigen (9b, 11b) des hinteren Dachteiles (8b) liegt.

5. Personenkraftwagen nach einem der Ansprüche 1- 3,
**dadurch gekennzeichnet, daß** das im geschlossenen Zustand vordere Dachteil (8a) unter das hintere Dachteil (8b) verfahrbar und von diesen geführt und somit gemeinsam mit diesem in den Fließheckscheibenrahmen (1) einführbar ist.

6. Personenkraftwagen nach einem der vorangegangenen Ansprüche,
**dadurch gekennzeichnet, daß** an der Hinterkante (18) des hinteren Dachteiles (8b) eine Bremsleuchte angebracht ist.

## Claims

1. A passenger vehicle comprising an aerodynamic rear window frame (1) which can be pivoted into the vehicle interior about a pivot axis (6) extending transverse to the longitudinal axis (5) of the vehicle in the rear region of the vehicle, and comprising a part of the vehicle roof which can be displaced in the direction of the longitudinal axis (5) of the vehicle and can be introduced into the aerodynamic rear window frame (1) and can be made to at least substantially overlap the rear window (2) arranged therein and in this state can also be pivoted into the vehicle interior,
**characterised in that** the vehicle roof comprises at least two roof parts (8a, 8b) located one behind the other in the closed state which can be moved separately in the direction of the longitudinal axis (5) of the vehicle and the two - then located one above the other - can be introduced into the aerodynamic rear window frame (1).

2. A passenger vehicle according to claim 1, wherein front seats (14) and a rear bench seat (15) are provided,
**characterised in that** the aerodynamic rear window frame (1) can be pivoted onto a rear shelf (16) provided behind the rear bench seat (15).

3. A passenger vehicle according to claim 1 or claim 2,
**characterised in that** the aerodynamic rear window frame (1) in its position which is pivoted into the vehicle interior and/or the rear shelf (16) provided behind the rear bench seat (15) seal(s) a luggage space provided below said elements in the rear region of the vehicle against the entry of rain water.

4. A passenger vehicle according to any one of the preceding claims,
**characterised in that** separate guide rails (9a, 9b) which continue into the aerodynamic rear window frame (1), are provided in the rigid roof rail (3') of the side frame (3) of the car body for the front roof part (8a) and for the rear roof part (8b), in the closed state, the guide rail (9a, 11a) of the front roof part (8a) being located above that (9b, 11b) of the rear roof part (8b).

5. A passenger vehicle according to any one of claims 1 to 3,
**characterised in that** the front roof part (8a) in the closed state can be moved underneath the rear roof part (8b) and guided thereby and therefore, together therewith, can be introduced into the aerodynamic rear window frame (1).

6. A passenger vehicle according to any one of the preceding claims,
**characterised in that** a stop light is attached to the rear edge (18) of the rear roof part (8b).

## Revendications

1. Véhicule automobile comportant un cadre de lunette arrière aérodynamique (1), qui peut pivoter à l'intérieur de l'habitacle du véhicule autour d'un axe de pivotement (6) s'étendant transversalement par rapport à l'axe longitudinal du véhicule (5) et situé dans la zone arrière du véhicule, et comportant également une partie du toit du véhicule mobile dans la direction de l'axe longitudinal du véhicule (5), partie qui peut être introduite dans le cadre de lunette arrière aérodynamique (1) et amenée au moins pour l'essentiel en chevauchement avec la lunette arrière (2) disposée à l'intérieur, et qui, dans cet état, peut pivoter conjointement avec cette dernière dans l'habitacle du véhicule,
**caractérisé en ce que**
le toit du véhicule se compose d'au moins deux parties de toit (8a, 8b) situées l'une derrière l'autre dans l'état fermé, qui sont mobiles séparément dans la direction de l'axe longitudinal du véhicule (5) et qui peuvent toutes deux, lorsqu'elles se chevauchent, être introduites dans le cadre de lunette arrière aérodynamique (1).

2. Véhicule automobile selon la revendication 1, dans lequel il est prévu dans l'habitacle du véhicule des sièges avant (14) et une banquette arrière (15),
**caractérisé en ce que**
le cadre de lunette arrière aérodynamique (1) peut pivoter sur une plage arrière (16) prévue derrière la banquette arrière (15).

3. Véhicule automobile selon la revendication 1 ou 2,
**caractérisé en ce que**
le cadre de lunette arrière aérodynamique (1), dans sa position pivotée à l'intérieur de l'habitacle du véhicule et/ou la plage arrière (16) prévue derrière la baquette arrière (15) isole(nt) un coffre prévu en dessous de ces éléments mentionnés, dans la zone arrière du véhicule, contre l'infiltration d'eau de pluie.

4. Véhicule automobile selon l'une des revendications précédentes,
**caractérisé en ce que**
pour la partie de toit avant (8a) dans l'état fermé ainsi que pour la partie de toit arrière (8b), il est prévu des rails de guidage (9a, 9b) séparés dans le longeron de toit fixe (3') du cadre latéral (3) de la carrosserie du véhicule, qui se poursuivent à l'intérieur du cadre de lunette arrière aérodynamique (1), le rail de guidage (9a, 11a) de la partie de toit avant (8a) se trouvant au-dessus de celui (9b, 11b) de la partie de toit arrière (8b).

5. Véhicule automobile selon l'une des revendications 1 à 3,
**caractérisé en ce que**
la partie de toit avant (8a) dans l'état fermé peut être déplacée en dessous de la partie de toit arrière (8b), être guidée par celle-ci et ainsi être introduite conjointement avec celle-ci dans le cadre de lunette arrière aérodynamique (1).

6. Véhicule automobile selon l'une des revendications précédentes,
**caractérisé en ce qu'**
un feu stop est mis en place au niveau du bord arrière (18) de la partie de toit arrière (8b).
